# EUROPEAN PATENT APPLICATION

(11) **EP 0 869 512 A1**
(43) Date of publication of application: **07.10.1998**
(21) Application number: 97500062.1
(22) Date of filing: 02.04.1997
(51) Int. Cl.: G21C 3/10, B23K 9/167

(54) **Improvements to the ceramic nozzle flame outlets for welding plugs onto nuclear fuel rods, the manufacturing process for the rods and their corresponding plugs**

(71) Applicant: EMPRESA NACIONAL DEL URANIO, S.A., E-28040 Madrid (ES)
(72) Inventor: Alonso, Jesus Garcia c/o EMPRESA NAC.DEL URAN.,S.A, E-37115 Juzbado (Salamanca) (ES); Lopez, Pablo Gut. c/o EMPRESA NAC.DEL URANIO, S.A., E-37115 Juzbado (Salamanca) (ES)
(74) Representative: Carpintero Lopez, Francisco

(57) **Abstract**

The invention refers to the optimization of the laminar flow produced at the outlet of a flame (1), by a double ceramic nozzle (3-9) for welding, specifically applicable to weld plugs to the corresponding ends of the pipes forming the fuel rods in nuclear reactors, the welding being performed by an electric arc jumping from a tungsten electrode (6) to the object to be welded, inside a tight chamber full of inert gas. The use of this double nozzle (3-9) allows welding at a high inert gas pressure, hence eliminating the sealing phase required in the production processes of nuclear fuel rods.

## Description

### OBJECT OF THE INVENTION

The invention refers to a series of improvements introduced in the flames used in welding with tungsten electrodes, for fixing plugs over nuclear fuel rods. Said improvements consist of the use of a double ceramic nozzle optimizing the laminar flow incorporated to the flame to permit high pressure welding.

The flame together with the nozzle, and, naturally, the electrode to execute welding, is especially applicable to any kind of process involving TIG welding, namely, those based on tungsten electrodes. Although, particularly, the flame herein described has a specific application in the field of cap welding to Zircaloy pipes without sealing boreholes for the preparation of fuel element rods used in nuclear reactors.

The invention also provides the production process for these fuel element rods, and even the characteristics of the plugs themselves, since the application of high-pressure welding influences the different production process stages of said rods and plugs, as well as in the corresponding inspections.

### BACKGROUND TO THE INVENTION

A vessel corresponding to a nuclear reactor includes several fuel assemblies, each one consisting of a number of nuclear fuel rods specifically containing enriched UO₂ pellets or other radioactive oxides or a mixture thereof comprising the active material.

The aforementioned rods consist of Zircaloy pipes filled with fuel pellets, retainer and absorbent assemblies, to which two plugs of the same material are welded at their ends.

Now then, the type of welding used to join the pipe with the plugs is that known as TIG, consisting of an electric arc that jumps from a tungsten electrode to the object to be welded, inside a tight chamber full of inert gas (normally helium and/or argon). The latter is performed such that the arc melts the pipe-cap joint area, whilst the latter rotates.

The tungsten electrode used in welding consists of a narrow tungsten alloy cylinder of different diameters, those of 1 and 1.5 mm diametre being more commonly used to prepare fuel rods, the electrode being fixed by a flame that should be equipped with a welding point and an inert gas inlet and whose purpose is to cool the electrode and maintain an inert atmosphere where combustion is not possible.

On the other hand, the end of the electrode where the arc jumps should be free and surrounded by a flow during welding to prevent its combustion and facilitate heat exchange. Traditionally, when welding at low pressure (slightly greater than atmospheric pressure), a single ceramic nozzle has been used to direct said flow, thought to be more suitable for laminar type heat exchange. However, at high pressures, small changes of section in the flame will produce eddy flows.

When inspecting welding, two types of inspection may be used, the so-called destructive one (metallographic analysis) or the non-destructive one (ultrasonic or X-ray inspection), such that if the destructive test is used, by performing longitudinal metallography and attack, the weld bead or melted pipe-cap area may be observed, said weld bead having a semi-elliptical configuration, such that the major axis of the ellipse is called "bead width", whilst the minor semi-axis is called "radial penetration". The ratio between radial penetration and bead width is known as weld litheness, this being one of its quality characteristics.

Moreover, it is necessary that the gap left by the pellets within the pipe is filled with inert gas (the same as that used in welding) pressurized between 10 kg/cm² (BWR) and 30 kg/cm² (PRW). Until now, the state-of-the-art has not allowed circular welds to be performed directly at said pressure values, such that the use of better plugs with a hole has been resorted to, allowing the can to be pressurized and hermetically sealed at a later production stage.

### DESCRIPTION OF THE INVENTION

The purpose of the invention is to eliminate the sealing and inspection stages to be executed as a result of the sealing stage performed conventionally, as well as those of the nuclear fuel rod production and plug manufacture and forming processes. For this reason, it is necessary to weld plugs with a hooped design at high pressures.

Moreover, to perform high pressure welding and with hooped designed plugs, it is necessary to use a double nozzle optimizing the laminar flow at the gas outlet through the flame, such that this double nozzle permits specific heat concentration, increasing weld litheness, a necessary requirement when welding at high pressure, since if melting occurs outside the hooped area, melt down and blow down problems occur.

As a result, the use of laminar flow at the flame outlet favours heat exchange in the welds, such that by working at high pressures, this flow may be optimized by a double nozzle set which, in turn, concentrates the heat and increases their litheness.

The concentrated laminar flow will permit high pressure welding and the simplification of the nuclear fuel element or rod production process, the result of the latter being that hooped plugs may be used without a sealing borehole, besides eliminating the sealing stage and corresponding welding inspections, in that way gaining in productivity and cheapening the product.

Besides, as a result of that expressed above, two production phases will be modified, one corresponding to the simplification of the rod and plug production process, as well as the change of stages in the second welding, and another corresponding to the elimination of the phases required in conventional processes, corresponding to the suppression of the pressurization and sealing stages, the sealing inspections and the radiographic sealing inspection.

Definitively, the flame made according to the improvements of the invention, that is, equipping with the double ceramic nozzle, allows gas flow to be optimized and concentrated on the area to be welded, permitting high pressure welding between 10 and 30 kg/cm², which is possible thanks to the optimization of concentrated laminar flow and the use of borehole-free hooped plugs.

### DESCRIPTION OF THE DRAWINGS

To complement the description being made and for a better understanding thereof, this specification is accompanied by a set of drawings, to illustrate but in no way limit it, as follows:
Figure 1.- This represents a section corresponding to the lower end of a welding flame with a conventional nozzle, it being possible to see the raised opening at its outlet, as well as the section changes in the area where the nozzle joins the flame approach axis. Obviously, when working at low pressures, this change of section is irrelevant. However, this is not the case at high pressures, since said section changes would imply sudden changes in flow speed with the ensuing production of eddy flows.
Figure 2.- Shows a side elevation view with a quarter section and a plan view of a nozzle used traditionally.
Figure 3.- Shows a side elevational view with a quarter section and a plan view of the second nozzle complementing the traditional nozzle used in the flame and made according to the improvements of the invention.
Figure 4.- Shows the second nozzle adapted over the inside end part of the main nozzle within the assembly comprising the welding flame.
Figure 5.- Shows a side elevational view of the head corresponding to the plug used to weld at a high pressure according to the improvements of the invention.
Figure 6.- Shows the practical application or result of welding the plug represented in the previous figure at a high pressure.
Figure 7.- Shows the diagram corresponding to the nuclear fuel rod production process, based on using flames with double ceramic nozzles to perform welding.
Figure 8.- Shows the production process for the plug shown in figure 5, used for welding at a high pressure.

### PREFERABLE EMBODIMENT OF THE INVENTION

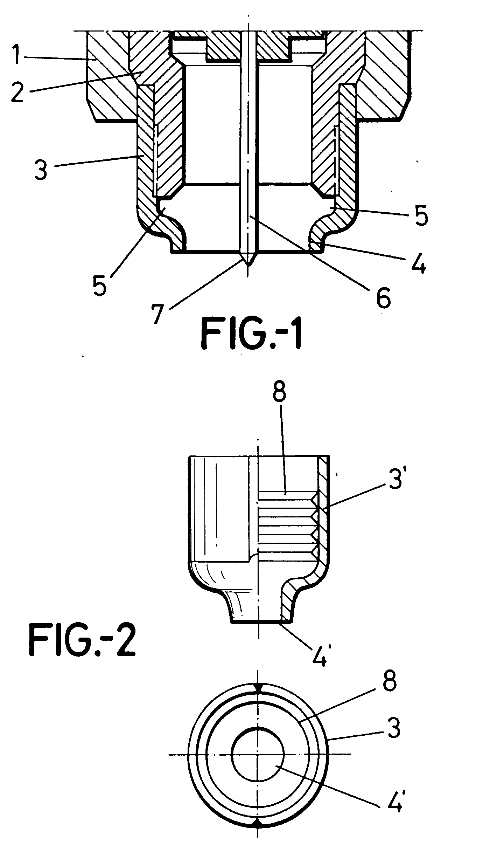

As may be observed in the aforementioned figures, and specifically referring to figure 1, a flame generally indicated by the number (1) may be seen, with its corresponding internal body (2) and the ceramic nozzle (3), with its outlet mouth (4), having a considerably wide opening and of a design such that the flow generated should be laminar for pressures near to atmospheric pressure, since changes of section (5) thereof are deemed negligible. Besides the mentioned flame, the corresponding tungsten electrode (6) and its free end (7) may be observed in this same figure 1.

Figure 2 shows a conventional nozzle (3') with an internal screw thread (8) for its assembly and coupling in the flame body (1). This nozzle (3') has a narrow outlet mouth (4').

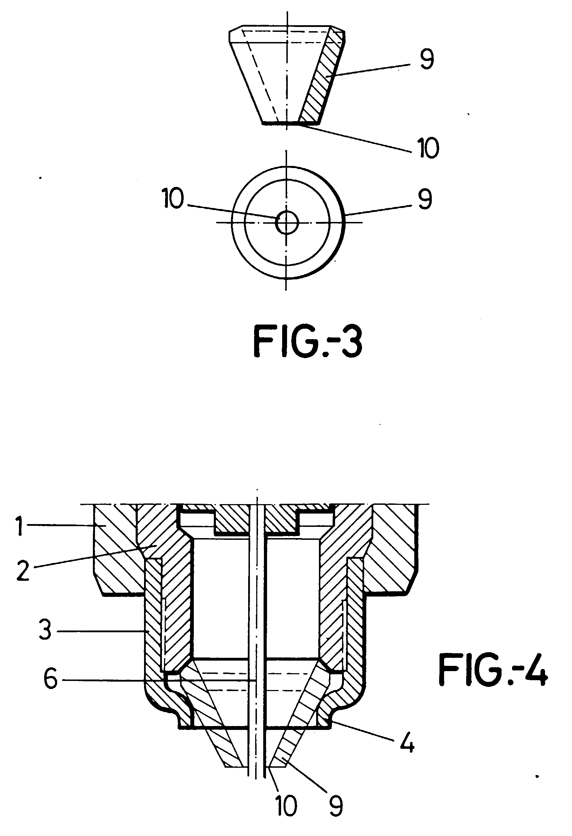

Now then, according to these conventional features, one of the novelties of the invention consists of using a second nozzle (9) having a tapered configuration, although with a slightly oval contour and with an outlet mouth (10) of a reduced diameter, such that hereinafter this nozzle (9) will be called the "internal nozzle", foreseeing its assembly inside the flame (1), corresponding to the outlet mouth (4) of the nozzle (3). The mentioned internal nozzle (9) being overlapped, as seen in figure 4, which prevents sudden changes of section and, hence, averts the production of eddy flows when working at high pressures. On the other hand, the narrowness of the outlet mouth (10) of the internal nozzle (9), with its special configuration, facilitates heat concentration and welding litheness, since the laminar flow foreseen to perform high pressure welding is perfectly concentrated, which, in turn, allows a simplification of the production process, both of the nuclear fuel rods and the plugs used and which are welded to the ends of the former.

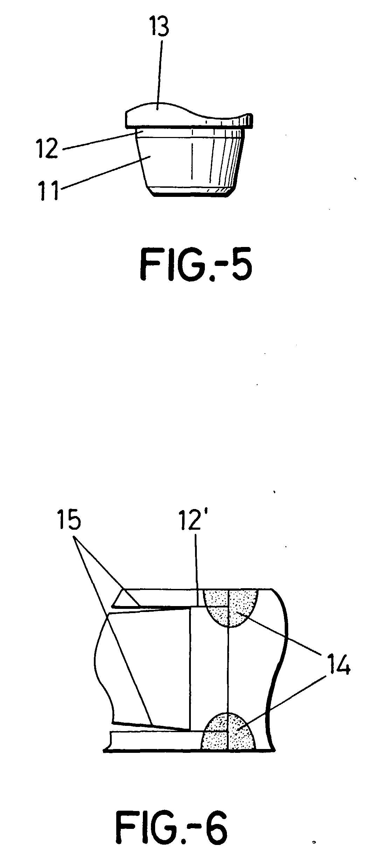

To weld at a high pressure it is necessary that the corresponding plug (11) has a hooped design (12) and a head (13) with a special configuration as shown in figure 5, plugs facilitating the capping of the rods and which allow a pressure difference to be maintained between the interior of said rods and the chamber necessary for said type of welding. On the other hand, and due to the fact that the flow is narrow and turbulent, the area melted in the weld (14) is reduced, such that the bead is narrower than the hooping length (12'), avoiding melting of the area without hooping (15), which would involve problems of melt down and blow up.

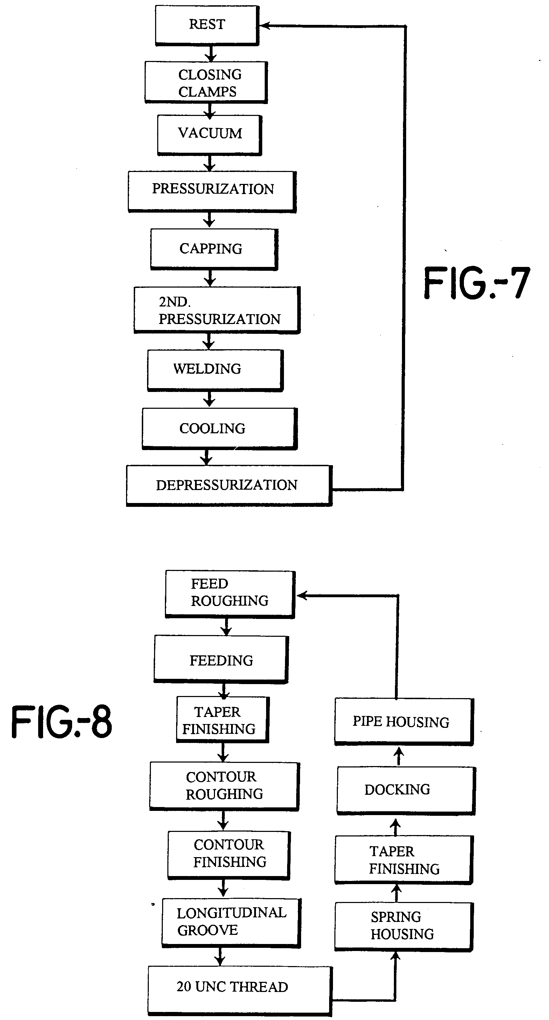

The use of flames with a double ceramic nozzle according to that described above, and the possibility of performing plug welding at a high pressure allows nuclear fuel rods to be obtained by a process more simple than traditional ones, this process including the stages shown in figure 7 and corresponding, from that of rest, to: a first stage to close clamps, followed by a vacuum stage, then a pressurization stage, followed by a capping stage and then a second pressurization stage, being followed by welding and afterwards the corresponding cooling and a final depressurization stage, hence eliminating the conventional pressurization stages, sealing and the pertinent corresponding inspections, besides those already commented in the conventional production processes of fuel rods.

Likewise, the plug used according to that described above and which is welded at a high pressure, at the ends of the nuclear fuel rods, is obtained according to a process which similarly reduces specific stages regarding conventional production systems, namely, the stages of the plug production process consist of: feed roughing, followed by the feeding stage itself, continued by a finishing stage of the tapered part, in turn followed by a contour roughing stage, and then, a finishing stage of the contour itself, then, in a following stage making a longitudinal groove of the plug itself and then a thread, as well as the housing of a spring, the finishing of the corresponding tapered surface, to perform docking and terminating with the plug housing stage in the corresponding pipe forming the relevant nuclear fuel rod.

## Claims

1. Improvements to the ceramic nozzle flame outlets for welding plugs onto nuclear fuel rods, which on being applicable to that type of flame used in circular welding processes where a plug is welded on the corresponding ends of nuclear fuel rods, an electric arc which jumps from a tungsten electrode to the object to be welded is used in welding, and where the welding is performed inside a tight chamber filled with inert gas, the flame itself using a ceramic nozzle (3) with a wide outlet mouth (4) and a nozzle (3') with a narrow outlet mouth (4'), characterized in that it includes a second internal nozzle (9) of the same material, having a tronco-conical configuration, with its greater open base overlapping with the end of the internal body (2) of the flame (1), and with the same diameter as the former, whilst the outlet end configures a narrow mouth (10) optimizing the laminar flow of the inert gas concentrating it towards the area to be welded and enabling the performance of high pressure welding.

2. Improvements to the ceramic nozzle flame outlets for welding plugs onto nuclear fuel rods, according to claim 1, characterized in that the pressure at which welding is executed within the tight chamber of inert gas, varies between 10 and 30 kg/cm².

3. Nuclear fuel rod manufacturing process, where the rods consist of Zircaloy pipes filled with fuel pellets and closed at their ends by the corresponding caps, fixed by welding at a high pressure, characterized by performing two different pressurization phases and between them, a phase corresponding to the capping of the pipe ends comprising the rods, then carrying out the corresponding welding after the second pressurization phase, afterwards a cooling phase, followed by a final depressurization phase.

4. Plug for closing the ends corresponding to the nuclear fuel rods, foreseen to be fixed by welding to the ends of a nuclear fuel rod and whose welding is performed at a high pressure, characterized in that it consists of a body (11) with a slightly tronco-conical configuration, with no openings, hooping (12) and a head (13) with a special configuration, creating a melted area (14) in the weld, whose corresponding bead is narrower than the hooping length (12').
